# EUROPEAN PATENT SPECIFICATION

(11) **EP 2 554 047 B1**
(45) Date of publication and mention of the grant of the patent: **24.10.2018**
(21) Application number: 12170881.2
(22) Date of filing: 05.06.2012
(51) Int. Cl.: A01K 5/00, A01F 29/09, B01F 7/00, A01D 34/73

(54) **Blade or contrast blade**
Messer
Couteau

(30) Priority: 02.08.2011 IT TV20110026 U
(43) Date of publication of application: 06.02.2013
(73) Proprietor: Cavarzan, Giuliano, 31050 Vedelago, Frazione Fanzolo (TV) (IT)
(72) Inventor: Cavarzan, Giuliano, 31050 Vedelago, Frazione Fanzolo (TV) (IT)
(74) Representative: Modiano, Micaela Nadia

(56) References cited:
- EP-A1- 0 244 041
- WO-A1-97/17841
- AU-A- 3 594 984
- US-A- 2 802 408
- US-A- 3 589 452

## Description

The present invention relates to a blade or contrast blade that can be used particularly in machines for shredding cereals and/or fibrous material.

Currently, devices or machines for shredding and mixing cereals and/or fibrous materials to prepare animal feeds are known which comprise a hopper, having an elongated shape, which has an approximately semicylindrical bottom which accommodates coaxially and rotatably a screw feeder which is arranged horizontally, usually divided into a right-handed or left-handed helical section, and a left-handed helical section.

The cereals and/or fibrous products, such as for example dry hay or straw, are loaded into the hopper and, by turning the screw feeder in a convenient direction, are pushed, both by the right-handed portion of the screw feeder and by the left-handed one, towards the center of the hopper, where, by colliding with each other or with an optional partition keyed to the screw feeder shaft, they receive an upward thrust toward the side walls of the hopper, so as to fall back onto the screw feeder, which pushes them again toward the center of the hopper, thus making it possible to obtain the mixing of the cereals and/or fibrous products.

A series of blades is associated with and protrude from the vanes or helixes of the screw feeder and are matched by abutment contrast blades that protrude approximately at right angles from one or both of the side walls of the hopper.

The contrast blades are typically welded to the inner surface of the side walls of the hopper or, as an alternative, are inserted from the outside of the hopper in adapted slots formed in the side walls thereof, and are fixed in a detachable manner by means of adapted screws and bolts to the side walls, so that they can be replaced if necessary.

The blades, too, are usually welded or fixed in a detachable manner, by means of adapted screws or bolts.

In a further known embodiment, a plurality of contrast blades, having a disc-like shape, is keyed to a shaft, which is parallel to the shaft of the screw feeder and is arranged in a recess formed in one of the side walls of the hopper, at a distance from the shaft of the screw feeder that is a multiple of the diameter of the shaft provided with contrast blades. The shaft is connected to the inside of the hopper; the contrast blades therefore protrude toward the inside of the hopper so as to act as an abutment for the blades associated with the screw feeder.

During the rotation of the screw feeder, the blades and the abutment contrast blades push and cut the cereals and/or fibrous products, breaking them up progressively as they advance toward the center of the hopper. This is done mainly to obtain fibrous products whose dimensions are suitable for use as feeds and also to prevent very long portions of the fibrous products from becoming tied to the screw feeder during its rotation, hindering its motion and reducing therefore the effectiveness of the stirring.

In the illustrated solutions there is a considerable drawback which occurs when the blades and the contrast blades have to be replaced: they are in fact very numerous and are arranged in positions that are very difficult to access by the operators.

This makes their replacement quite long, difficult and dangerous, even when they are fixed in a detachable manner by means of adapted screws and bolts, since the removal of every single nut or bolt is rendered even more difficult by the wear of the material, worsened by the fact that stones or other hard material also falls often into the hopper.

This forces in practice the operator to use an angle grinder in order to remove nuts and bolts, and therefore to use an apparatus whose use is dangerous especially if it occurs in a confined space.

US 3 589 452 A discloses a rotary earth-working implement having a rotor shaft mounting a series of axially spaced tine plates carrying a number of radially extending digging and pulverizing tines. Each tine includes a shank by which the tine is secured to the plate, and a tine-mounting assembly includes a U-shaped tine holder secured to the rotor plate and forming therewith an open-ended tine-recieving socket, having disposed therein a pair of pins. A first pin is located to be received in a locating notch in the shank end of the tine inserted into the socket in an assembly position, from which the tine is rotated about the first pin until a second pin is recived by a retaining notch in the rear edge of the tine in a working position. A removable retaining pin is employed to releasably hold the tine in the working position.

The aim of the present invention is to solve the highlighted technical problems, eliminating the drawbacks of the cited background art, by providing a device that allows the quick, easy and safe replacement of blades and/or contrast blades in adapted machines, for example of the agricultural type, such as machines for shredding cereals and/or fibrous material for transport and/or shredding and/or mixing, particularly of cereals and/or fibrous material for the production of feeds.

Within this aim, an object of the invention is to provide a device that makes it possible to perform this replacement without the use of particular equipment, such as for example angle grinders.

Yet another object is to allow this replacement in complete safety for the operator.

Another object is to allow this replacement with a small number of simple operations by the operator.

Another object is to allow the replacement even by an operator who is not particularly trained.

Another object is to provide a device that is structurally simple and has low manufacturing and maintenance costs.

In accordance with the invention, there is provide a blade or contrast blade as defined in the appended claims.

Further characteristics and advantages of the invention will become better apparent from the detailed description of a particular but not exclusive embodiment, illustrated by way of non-limiting example in the accompanying drawings, wherein:

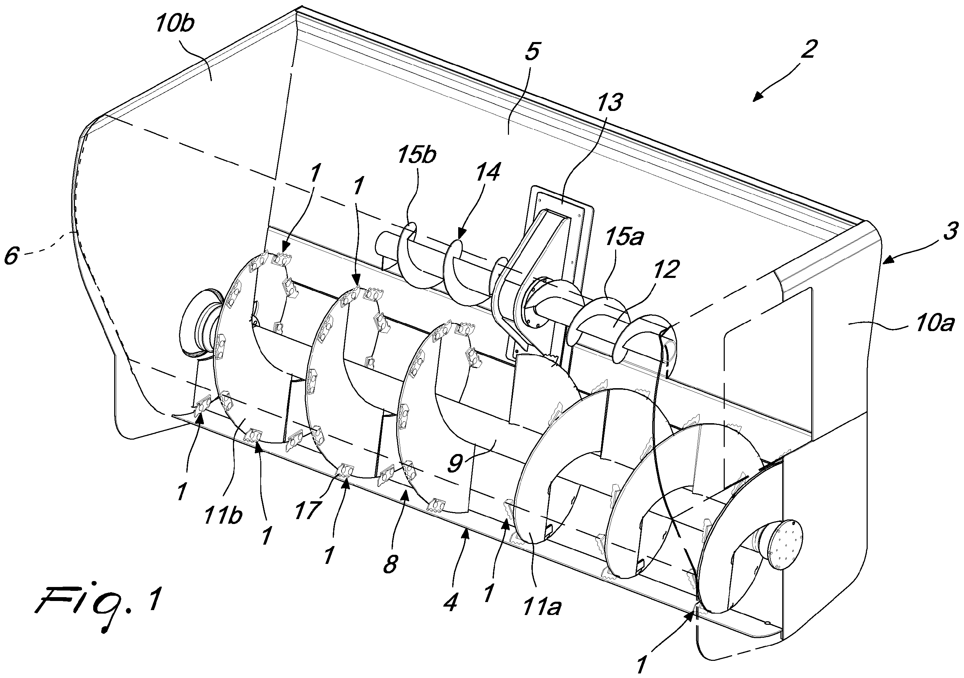

Figure 1 is a perspective view of a machine with the device according to the invention applied thereto;

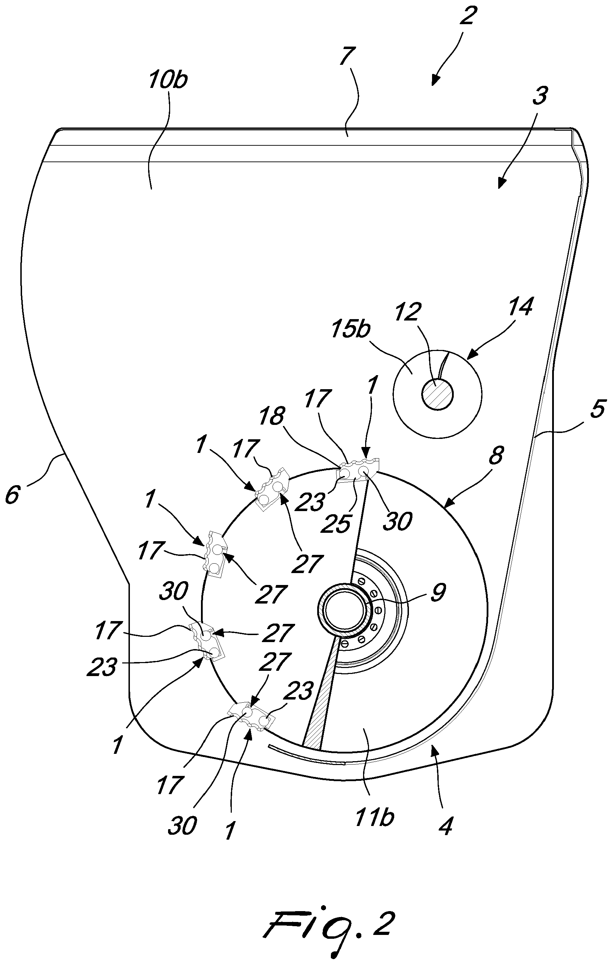

Figure 2 is a partially sectional side view of the machine of the preceding figure;
Figures 3, 5 and 7 are side views of the device according to the invention in the steps for interconnection to the support;
Figures 4, 6 and 8 are top views of the device according to the invention of Figures 3, 5 and 7;

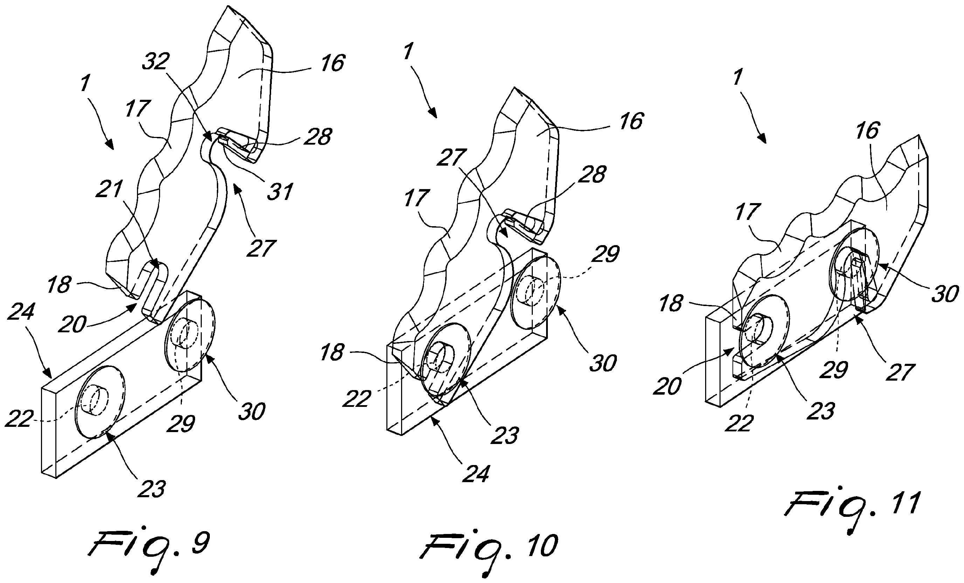

Figures 9, 10 and 11 are perspective views of the device according to the invention of Figures 3, 5 and 7.

In the exemplary embodiments that follow, individual characteristics, given in relation to specific examples, may actually be interchanged with other different characteristics that exist in other exemplary embodiments.

With reference to the figures, the reference numeral 1 designates a blade or contrast blade which can be used in particular in machines 2 for shredding cereals and/or fibrous material of the type comprising a hopper 3, preferably having an elongated shape, which has an approximately semicylindrical bottom 4 from the longitudinal ends of which there extend respectively a first side wall 5, which is substantially flat and slightly inclined toward the outside of the hopper 3, and, on the opposite side to the first side wall 5, a second side wall 6, which has a slightly arc-like shape.

Advantageously, the first and second side walls mutually diverge in the direction away from the bottom 4, so that the hopper 3 has, in a transverse cross-section, substantially the shape of an isosceles trapezoid, in which the longer parallel side 7 is open and faces upward.

The hopper 3 is in fact open upward and can be optionally closed by an adapted cover, which is not shown in the accompanying figures.

At least one door is provided on at least the first side wall 5 or the second side wall 6, which is adapted to allow access to the inside of the hopper 3, for example, to remove the cereals and/or fibrous material after their shredding and mixing.

At least one first screw feeder 8 is supported rotatably inside the hopper 3, is constituted by a first shaft 9 arranged so that its longitudinal axis is approximately parallel to the longitudinal axis of the bottom 4, and is supported rotatably, at its ends, at the transverse walls, designated respectively by the numerals 10a, 10b, of the hopper 3.

At least one first sequence of first vanes 11a and at least one second sequence of first vanes 11b protrude radially from the first shaft 9, are mutually opposite and are arranged so as to define two contiguous spirals with mutually opposite advancement directions.

As an alternative, instead of the first series of first vanes 11a and of the second series of first vanes 11b two helixes with mutually opposite directions of rotation can be provided, not shown in the accompanying figures, each of which affects approximately half of the length of the first shaft 9.

At the first and/or second side wall 5, 6 of the hopper 3, or as an alternative at the front and back wall of the hopper, a second shaft 12 can be provided, which in the particular embodiment is preferably arranged only at the first side wall 5 of the hopper 3 and is supported rotatably by a flange 13 which protrudes from the first side wall 5.

A second screw feeder 14 is keyed at the second shaft 12 and is composed of at least one first sequence 15a and at least one second sequence 15b of second vanes, which are mutually opposite and are arranged so as to define two contiguous spirals with mutually opposite advancement directions.

One or more radially protruding blades or contrast blades 1 are associable with the outer perimetric edge of the first and second sequences of vanes and/or of the helixes and/or of the bottom 4 and/or of the walls 5, 6; advantageously, the blades or contrast blades are such to skim, in their advancement, the lateral inner surfaces of the first and second side walls of the hopper 3.

Each blade or contrast blade 1 is composed of a plate 16, preferably having a substantially rectangular shape, which has a sharp first perimetric edge 17.

A first seat 20 is provided on a third front edge 18, which is adjacent to the first sharp perimetric edge 17, and along an axis 19 thereof, and has such a shape and a blind end 21 as to allow the sliding coupling to a first shank 22 of a first rivet 23, which is T-shaped and protrudes from a support 24 for the blade or contrast blade 1.

The support 24 can be constituted by the first vanes 11a, 11b and/or the second vanes 15a, 15b or by the transverse walls 10a, 10b or by the bottom 4.

A second seat 27 is formed on the second perimetric edge 25 of the plate 16, which is opposite to the first sharp perimetric edge 17, and along an axis 26 which is substantially perpendicular to the first sharp perimetric edge 17. The second seat 27 is provided axially with at least one wing 28 that can be deformed elastically for stable and temporary interconnection to a second shank 29 of a second T-shaped rivet 30, which protrudes from the support 24.

The elastically deformable wing 28 is arranged axially and laterally to the second seat 27 in order to define a deformable side thereof, which protrudes from the opposite side with respect to the third front edge 18 of the plate 16.

The wing 28 has the free end 31 which faces the blind end 32 of the second seat 27 and is connected elastically, at the opposite side, to the plate 16.

The wing 28 is shorter than the depth of the second seat 27, so that its free end 31 can be deformed so as to vary temporarily the width of the second seat 27.

The distance between the blind end 21, 32 of the first seat 20 and the second seat 27 is substantially equal to the distance between the first shank 22 and the second shank 29 of the first rivet 23 and the second rivet 30.

The arrangement of the first shaft 22 and second shaft 29 of the first rivet 23 and second rivet 30 are such as to allow the sliding interconnection and the subsequent temporary locking, due to the rotation imparted to the plate 16, of the blade or contrast blade to the support, the plate 16 being then locked by interference by the wing 28. Moreover, the first and second shanks 22, 29 are arranged so as to define a desired inclination of the plate 16.

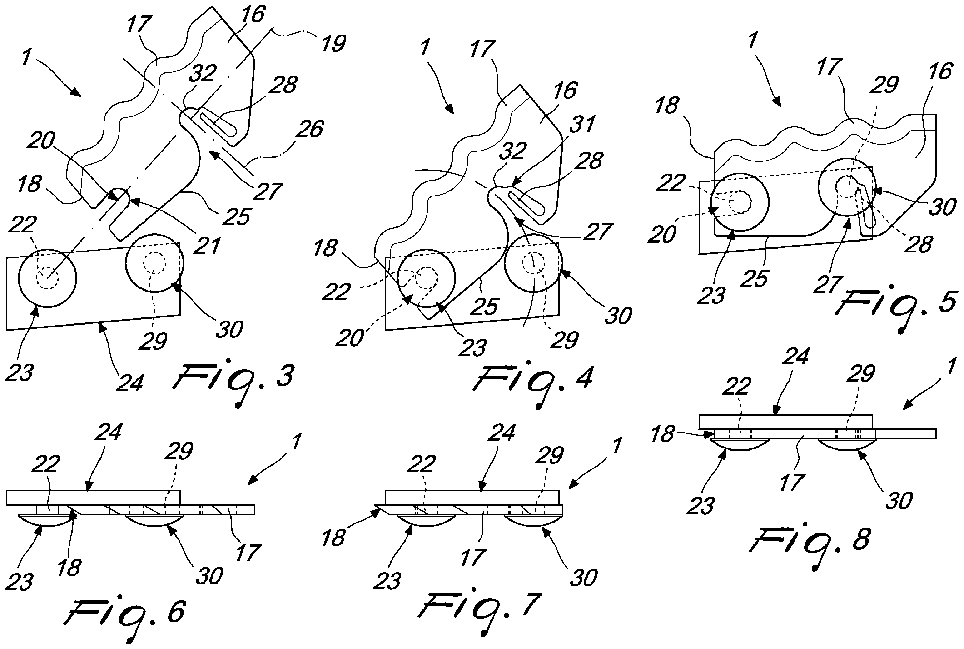

The second seat 27, together with the shape of the blind end 31 and the position of the wing 28, are therefore such to allow, after the arrangement of the first shank 22 in the first seat 20, as shown in Figure 5, the subsequent rotation of the plate 16 toward the support 24 so as to allow the insertion of the second shank 29 in the second seat 27, as shown in Figure 7.

During the insertion of the second shank 29 a slight deformation is imparted to the wing 28 until the shank 29 moves beyond or abuts against the free end 31 and arranges itself adjacent to the blind end 32 of the second seat 27.

In this point the free end 31 abuts against the lateral surface of the second shank 29, which is thus locked in its position.

If the blade or contrast blade 1 must be replaced, it is sufficient to press slightly the wing 28, deforming it elastically until the second shank 29 is released, allowing the free rotation of the plate 16 and therefore the extraction thereof from the first seat 20.

It has thus been found that the invention has achieved the intended aim and objects, a blade or contrast blade having been devised for which quick, easy and safe replacement is allowed without the use of particular equipment.

The replacement occurs in complete safety and with a small number of easy operations by the operator who does not have to be particularly trained.

Finally, the blade or contrast blade is structurally simple and can be replaced in a very short time.

Obviously, the invention is susceptible of numerous modifications and variations, all of which are within the scope of the appended claims.

Thus, for example, the first screw feeder 7 and the second screw feeder 13 can affect or not the entire length of the hopper and can have or not vanes with mutually opposite spirals.

The materials used, as well as the dimensions that constitute the individual components of the invention, may of course be more pertinent according to the specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A blade or contrast blade (1), composed of a plate (16) which has a first sharp perimetric edge (17) and, on the opposite side, a second perimetric edge (25), which are mutually connected by a third front edge (18), said third front edge (18) being slidingly and rotatably associable, and said second perimetric edge (25) being lockable temporarily, following a rotation imposed thereto, respectively at an adapted first rivet (23) and second rivet (30) which protrude from a support (24), said blade or contrast blade (1) having, on said third front edge (18) adjacent to said first sharp perimetric edge (17) and along the axis (19) thereof, a first seat (20) for sliding coupling to a first shank (22) of said first rivet (23) which protrudes from said support (24) for said blade or contrast blade, and on said second perimetric edge (25) of said plate (16) which is opposite to said first sharp perimetric edge (17) and along an axis (26), which is substantially perpendicular thereto, a second seat (27), which has axially at least one wing (28) which can be deformed elastically for stable and temporary interconnection of said second shank (29) of said second rivet (30) which protrudes from said support (24).

2. The blade or contrast blade according to claim 1, **characterized in that** said plate (16) has a substantially rectangular shape, said first seat (20) having a shape and blind end (21) which allow sliding coupling to said first shank (22) of said first rivet (23), which is T-shaped and protrudes from said support (24) for said blade or contrast blade (1).

3. The blade or contrast blade according to claim 2, **characterized in that** said elastically deformable wing (28) is arranged axially and laterally to said second seat (27) in order to define a deformable side, which protrudes on the opposite side with respect to said third front edge (18) of said plate (16).

4. The blade or contrast blade according to claim 2, **characterized in that** said wing (28) has its free end (31) directed toward the blind end (32) of said second seat (27) and is connected elastically, at the opposite side, to said plate (16), said wing (28) being shorter than the depth of said second seat (27) so that its free end (31) can be deformed so as to vary temporary the width of said second seat (27).

5. The blade or contrast blade according to claim 4, **characterized in that** the distance between said blind ends (21, 32) of said first seat (20) and said second seat (27) is substantially equal to the distance between said first shank (22) and second shank (29) of said first rivet (23) and said second rivet (30).

6. The blade or contrast blade according to claim 5, **characterized in that** said second seat (27), together with the shape of the blind end (31) and the placement of said wing (28), are such to allow, after the arrangement of said first shank (22) in said first seat (20), the subsequent rotation of said plate (16) toward said support (24), so as to allow the insertion of said second shank (29) in said second seat (27).

7. The blade or contrast blade according to claim 6, **characterized in that** during the insertion of said second shank (29) a slight deformation is imparted to said wing (28) until said second shank (29) moves beyond or adjacent to said free end (31) and arranges itself adjacent to said blind end (32) of said second seat (27), in this point said free end (31) abutting against the lateral surface of said second shank (29), which is thus locked in its position.

## Patentansprüche

1. Ein Messer (1), bestehend aus einer Platte (16), die eine erste scharfe Umfangskante (17) und auf der gegenüberliegenden Seite eine zweite Umfangskante (25) hat, die miteinander durch eine dritte Vorderkante (18) verbunden sind, wobei die dritte Vorderkante (18) verschiebbar und drehbar verbindbar und die zweite Umfangskante (25), nach einer Drehung, in die sie versetzt wird, vorübergehend blockierbar ist an einem geeigneten ersten Niet (23) beziehungsweise einem zweiten Niet (30), die aus einem Träger (24) herausragen, wobei das Messer (1) an der dritten Vorderkante (18), die an die erste scharfe Umfangskante (17) angrenzt, und entlang seiner Achse (19) einen ersten Sitz (20) zur Schiebkupplung mit einem ersten Schaft (22) des ersten Niets (23) hat, der aus dem Träger (24) für das Messer herausragt, und an der zweiten Umfangskante (25) der Platte (16), die der ersten scharfen Umfangskante (17) gegenüberliegt, und entlang einer Achse (26), die im Wesentlichen senkrecht dazu ist, einen zweiten Sitz (27), der axial mindestens einen Flügel (28) hat, welcher zur stabilen und vorübergehenden Kopplung des zweiten Schafts (29) des zweiten Niets (30), der aus dem Träger (24) herausragt, elastisch veformt werden kann.

2. Das Messer gemäß Anspruch 1, **dadurch gekennzeichnet, dass** die Platte (16) eine im Wesentlichen rechteckige Form hat, wobei der erste Sitz (20) eine Form und ein Sackloch (21) hat, die eine Schiebkupplung mit dem ersten Schaft (22) des ersten Niets (23) ermöglichen, der T-förmig ist und aus dem Träger (24) für das Messer (1) herausragt.

3. Das Messer gemäß Anspruch 2, **dadurch gekennzeichnet, dass** der elastisch verformbare Flügel (28) axial und seitlich von dem zweiten Sitz (27) angeordnet ist, um eine verformbare Seite zu bestimmen, die an der Seite herausragt, welche der dritten Vorderkante (18) der Platte (16) gegenüberliegt.

4. Das Messer gemäß Anspruch 2, **dadurch gekennzeichnet, dass** das freie Ende (31) des Flügels (28) dem Sackloch (32) des zweiten Sitzes (27) zugewandt und an seiner gegenüberliegenden Seite elastisch mit der Platte (16) verbunden ist, wobei der Flügel (28) kürzer ist als die Tiefe des zweiten Sitzes (27), so dass sein freies Ende (31) verformt werden kann, um die Breite des zweiten Sitzes (27) vorübergehend zu verändern.

5. Das Messer gemäß Anspruch 4, **dadurch gekennzeichnet, dass** der Abstand zwischen den Sacklöchern (21, 32) des ersten Sitzes (20) und des zweiten Sitzes (27) im Wesentlichen gleich dem Abstand zwischen dem ersten Schaft (22) und dem zweiten Schaft (29) des ersten Niets (23) und des zweiten Niets (30) ist.

6. Das Messer gemäß Anspruch 5, **dadurch gekennzeichnet, dass** der zweite Sitz (27), gemeinsam mit der Form des Sacklochs (31) und der Positionierung des Flügels (28), geeignet sind, nach der Anordnung des ersten Schafts (22) in dem ersten Sitz (20), die anschließende Drehung der Platte (16) zu dem Träger (24) hin zu ermöglichen, um so das Einsetzen des zweiten Schafts (29) in den zweiten Sitz (27) zu ermöglichen.

7. Das Messer gemäß Anspruch 6, **dadurch gekennzeichnet, dass** der Flügel (28) während des Einsetzens des zweiten Schafts (29) einer leichten Verformung unterzogen wird, bis der zweite Schaft (29) sich über das freie Ende (31) hinaus oder in seine Nähe bewegt und sich in der Nähe des Sacklochs (32) des zweiten Sitzes (27) anordnet, wobei an diesem Punkt das freie Ende (31) an die Seitenfläche des zweiten Schafts (29) anstößt, der so in seiner Position blockiert wird.

## Revendications

1. Couteau ou lame antagoniste (1), composé(e) d'une plaque (16) possédant une première arête périphérique tranchante (17) et, du côté opposé, une deuxième arête périphérique (25), reliées l'une à l'autre par une troisième arête frontale (18), ladite troisième arête frontale (18) étant associable par coulissement et rotation, et ladite deuxième arête périphérique (25) étant verrouillable temporairement, à la suite d'une rotation imposée à celle-ci, respectivement au niveau d'un premier et d'un second rivets (23, 30) adaptés qui font saillie depuis un support (24), ledit couteau ou ladite lame antagoniste (1) ayant, sur ladite troisième arête frontale (18), au voisinage immédiat de ladite première arête périphérique tranchante (17) et suivant l'axe (19) de celle-ci, un premier logement (20) pour un accouplement coulissant d'une première tige (22) dudit premier rivet (23) qui fait saillie depuis ledit support (24) pour ledit couteau ou ladite lame antagoniste, et sur ladite deuxième arête périphérique (25) de ladite plaque (16) opposée à ladite première arête périphérique tranchante (17) et, sur un axe (26) sensiblement perpendiculaire à celle-ci, un second logement (27), lequel possède axialement au moins une aile (28) qui peut être amenée à se déformer par élasticité pour une interconnexion stable et temporaire de ladite seconde tige (29) dudit second rivet (30) qui fait saillie depuis ledit support (24).

2. Couteau ou lame antagoniste selon la revendication 1, caractérisé(e) en ce que ladite plaque (16) a une forme sensiblement rectangulaire, ledit premier logement (20) ayant une forme et une extrémité borgne (21) qui permettent un accouplement par coulissement avec ladite première tige (22) dudit premier rivet (23), lequel a une forme en T et fait saillie depuis ledit support (24) pour ledit couteau ou ladite lame antagoniste (1).

3. Couteau ou lame antagoniste selon la revendication 2, caractérisé(e) en ce que ladite aile déformable par élasticité (28) est disposée axialement et latéralement par rapport audit second logement (27) afin de définir un côté déformable, lequel fait saillie du côté opposé par rapport à ladite troisième arête frontale (18) de ladite plaque (16).

4. Couteau ou lame antagoniste selon la revendication 2, caractérisé(e) en ce que l'extrémité libre (31) de ladite aile (28) est orientée vers l'extrémité borgne (32) dudit second logement (27) et est reliée d'une manière élastique, du côté opposé, à ladite plaque (16), ladite aile (28) étant plus courte que la profondeur dudit second logement (27) de telle sorte que son extrémité libre (31) puisse se déformer de manière à modifier temporairement la largeur dudit second logement (27).

5. Couteau ou lame antagoniste selon la revendication 4, caractérisé(e) en ce que la distance entre lesdites extrémités borgnes (21, 32) dudit premier logement (20) et dudit second logement (27) est sensiblement égale à la distance entre ladite première tige (22) dudit premier rivet (23) et ladite seconde tige (29) dudit second rivet (30).

6. Couteau ou lame antagoniste selon la revendication 5, caractérisé(e) en ce que ledit second logement (27), conjointement avec la forme de l'extrémité borgne (31) et la disposition de ladite aile (28) visent à permettre, après l'installation de ladite première tige (22) dans ledit premier logement (20), la rotation ultérieure de ladite plaque (16) vers ledit support (24) afin de permettre l'insertion de ladite seconde tige (29) dans ledit second logement (27).

7. Couteau ou lame antagoniste selon la revendication 6, caractérisé(e) en ce que, pendant l'insertion de ladite seconde tige (29), une légère déformation de ladite aile (28) est provoquée jusqu'à ce que ladite seconde tige (29) vienne au-delà ou au voisinage immédiat de ladite extrémité libre (31) et s'installe au voisinage immédiat de ladite extrémité borgne (32) dudit second logement (27), à ce stade ladite extrémité libre (31) butant contre la surface latérale de ladite seconde tige (29), qui est donc verrouillée en place.
